# EUROPEAN PATENT APPLICATION

(11) **EP 1 262 520 A1**
(43) Date of publication of application: **04.12.2002**
(21) Application number: 02252663.6
(22) Date of filing: 15.04.2002
(51) Int. Cl.: C08L 53/02, C08L 23/16

(54) **Thermoplastic elastomer material for paper feeding roller**

(30) Priority: 30.05.2001 JP 2001161638
(71) Applicant: Nitta Ind. Co., Ltd., Kobe-shi, Hyogo 654-0028 (JP); NIPPON CABLE SYSTEM INC., Takarazuka-shi Hyogo 665-0845 (JP)
(72) Inventor: Nitta, Haruhiko, c/o Nitta Ind. Co., Ltd., Kobe-shi, Hyogo 654-0028 (JP); Nitta, Shinya, c/o Nitta Ind. Co., Ltd., Kobe-shi, Hyogo 654-0028 (JP); Kubota, Yoshiki, c/o Nitta Ind. Co., Ltd., Kobe-shi, Hyogo 654-0028 (JP); Yanagita, Takashi, c/o Nitta Ind. Co., Ltd., Kobe-shi, Hyogo 654-0028 (JP)
(74) Representative: Bannerman, David Gardner

(57) **Abstract**

It is an object to provide a thermoplastic elastomer material for a paper feeding roller having all of a high coefficient of friction, great delivery force, a polishing workability and an abrasion resistance which are characteristics to be required for the paper feeding roller. It is preferable that 20 to 80 parts by weight of an olefin based thermoplastic elastomer and 80 to 20 parts by weight of a styrene based thermoplastic elastomer are contained and a total amount of both thermoplastic elastomers is 100 parts by weight.

## Description

### Field of the Invention

The present invention relates to a thermoplastic elastomer material for a paper feeding roller to deliver an original paper in an information apparatus such as a copying machine or a facsimile.

### Background of the Invention

In an information apparatus, conventionally, a roller made of rubber has generally been used for a paper feeding roller to deliver an original paper. The rubber roller is obtained by coating the outer periphery of a core with a rubber component to be an elastic member. In many cases, an ethylene-propylene-diene copolymer (EPDM) or a thermoplastic elastomer (which will be hereinafter referred to as a "TPE") is used as the rubber component.

The EPDM includes three components of ethylene, propylene and diene and has features that a weather resistance is excellent and a coefficient of friction is comparatively high.

The TPE includes two components of a soft segment (soft phase) to be a rubber component having an elasticity in a molecule and a hard segment (hard phase) to be a molecular constraint component for preventing plastic deformation, and is a polymer material which has the same property as the property of a vulcanized rubber and is elastic at an ordinary temperature and can be exactly molded by an existing molding machine in the same manner as an ordinary thermoplastic resin at a high temperature. In other words, since the TPE has the middle property of a rubber and plastics, it can be used in many fields. Typically, examples of the TPE include a styrene based TPE, an olefin based TPE, a vinyl chloride based TPE, an urethane based TPE, a polyester based TPE, a polyamide based TPE, a fluorine based TPE and the like. The vinyl chloride based TPE is particularly excellent in a weather resistance, the urethane based TPE and the polyester based TPE are particularly excellent in a mechanical strength, the polyamide based TPE is particularly excellent in a toughness, and the fluorine based TPE is particularly excellent in a chemical resistance.

For the characteristics of the paper feeding roller, it has been required that a coefficient of friction is high and delivery force is great, an abrasion resistance is high, polishing can easily be carried out to increase the precision of an outside diameter for the roller and a weight is small. However, the vinyl chloride based TPE, the urethane based TPE, the polyester based TPE, the polyamide based TPE and the fluorine based TPE cannot always satisfy these required characteristics. In this respect, the olefin based TPE is characterized in that it uses polyolefin such as polypropylene or polyethylene for a hard segment and an ethylene-propylene copolymer (EPR) and an ethylene-propylene-diene copolymer (EPDM) for a soft segment, has a specific gravity smaller than any other TPE, has a wide temperature range to be used (approximately -60 to 140°C) and is excellent in a thermal resistance. Moreover, the styrene based TPE uses polystyrene for a hard segment and polybutadiene, polyisoprene or polyolefin (an ethylene - butylene copolymer or an ethylene - propylene copolymer) for a soft segment, and has the closest property to the property of a vulcanized rubber and is well-balanced because it is soft and can be expanded easily.

An olefin based TPE having a Type A Durometer hardness of A35 to A90 is used for a rubber component of the paper feeding roller, and a styrene based TPE having a Type A Durometer hardness of A90 or less is used for the rubber component of the paper feeding roller. However, the olefin based TPE has drawbacks that a coefficient of friction is low and delivery force is small and the styrene based TPE has a drawback that a polishing workability and an abrasion resistance are deteriorated. Therefore, a single olefin based TPE or a single styrene based TPE is not optimum for the material of the paper feeding roller.

Moreover, the EPDM has the smallest specific gravity of all synthetic rubbers, and particularly, an excellent weather resistance, an excellent resistance to ozone, heat or chemicals but a poor abrasion resistance.

Furthermore, Japanese Patent Publication No. Hei 8-32808 has described a thermoplastic elastomer containing a polymer mixture essentially consisting of (1) a block copolymer obtained by 60 to 80% by weight of a vulcanized ethylene-propylene - diene rubber, 15 to 30% by weight of polypropylene and 3 to 10% by weight of at least block A and B components, the block A being polystyrene, the block B being polybutadiene or polyisoprene and a polymer of the block B being hydrogenated at least partially, and (2) 10 to 40% by weight of oil for plasticization based on the whole amount of the component (1). The thermoplastic elastomer described in the patent publication has an object to solve the following problems. More specifically, since the olefin based TPE has a comparatively high hardness, the components of the olefin based TPE are regulated through a mixture with soft oil to be softened in many cases. For this purpose, generally, a plasticizer to be naphthene based or paraffin based oil is added to the olefin based TPE. The plasticizer has a drawback that it easily exudes from the surface of the olefin based TPE. As a result, there is a disadvantage that the oil exudes from the surface and the surface becomes adhesive. In order to prevent the oil from exuding, 3 to 10% by weight of the styrene based TPE is mixed with 90 to 97% by weight of the olefin based TPE. Thus, the patent publication has described a thermoplastic elastomer which has an object to prevent the exudation of oil and has not described an object to deliver a paper at all.

### Summary of the Invention

In consideration of such problems of the prior art, it is an object of the present invention to provide a thermoplastic elastomer material for a paper feeding roller having all of a high coefficient of friction, great delivery force, a polishing workability and an abrasion resistance which are characteristics to be required for the paper feeding roller.

In order to attain the object, the present invention can provide a roller capable of being used suitably for the paper feeding roller in which a thermoplastic elastomer mixture obtained by mixing an olefin based TPE and a styrene based TPE is contained as an essential component so that the thermoplastic elastomers complement mutual drawbacks and improve characteristics thereof.

More specifically, the present invention provides a thermoplastic elastomer material for a paper feeding roller which contains, as an essential component, a thermoplastic elastomer mixture consisting of an olefin based thermoplastic elastomer using polyethylene or polypropylene as a hard segment and an ethylene-propylene copolymer or an ethylene-propylene-diene copolymer as a soft segment and a styrene based thermoplastic elastomer using polystyrene as a hard segment and polybutadiene, polyisoprene or polyolefin (an ethylene-butylene copolymer or an ethylene-propylene copolymer) as a soft segment.

It is preferable that the olefin based thermoplastic elastomer would contain 10 to 50 parts by weight of the hard segment and 50 to 90 parts by weight of the soft segment and the total thereof would be 100 parts by weight. Moreover, it is preferable that the styrene based thermoplastic elastomer would contain 10 to 50 parts by weight of the hard segment and 50 to 90 parts by weight of the soft segment and the total thereof would be 100 parts by weight.

It is preferable that dicyclopentadiene, 5-ethylidene-2-norbornen would be used for diene to be a third component of the ethylene-propylene-diene copolymer in respect of polymerization reactivity.

In order to sufficiently have a characteristic to be required for the paper feeding roller, moreover, it is preferable that 20 to 80 parts by weight of the olefin based thermoplastic elastomer and 80 to 20 parts by weight of the styrene based thermoplastic elastomer would be blended and a total amount of both thermoplastic elastomers would be 100 parts by weight.

In the case in which the amount of the olefin based thermoplastic elastomer is less than 20 parts by weight (the amount of the styrene based thermoplastic elastomer is more than 80 parts by weight), there are drawbacks that the polishing cannot be carried out under a low hardness and the polishing cannot be carried out under a high hardness in almost the same manner as a thermosetting rubber having a high polishing workability. On the other hand, in the case in which the amount of the olefin based thermoplastic elastomer is more than 80 parts by weight (the amount of the styrene based thermoplastic elastomer is less than 20 parts by weight), there are drawbacks that a coefficient of friction is reduced and great delivery force cannot be thereby maintained and an abrasion resistance is deteriorated.

In order to hasten mixing and dispersion of various compounding agents to easily carry out a molding work, it is preferable that a proper amount of a plasticizer such as a mineral oil based plasticizer, a vegetable oil based plasticizer or a phthalate based or adipate based synthetic plasticizer would be contained.

Moreover, it is possible to contain a filler or a reinforcing agent such as calcium carbonate, basic magnesium carbonate, natural silicic acid or silicate, if necessary.

Furthermore, it is possible to contain a deterioration inhibitor for preventing oxidation deterioration and ozone deterioration, if necessary.

Moreover, it is possible to contain a pigment, for example, a white pigment such as titanium oxide or a black pigment such as carbon black, if necessary.

Furthermore, it is possible to contain an organic modifier for improving a characteristic such as a durability or a thermal resistance, if necessary.

Moreover, it is possible to contain a finishing material or a coating material in order to enhance the appearance, if necessary.

Referring to a device for kneading various compounding agents, it is possible to use an internal kneading machine represented by a roll kneading machine or a Banbury mixer.

Referring to a molding method for molding a roller shape, it is possible to employ compression molding, injection molding, extrusion molding, blow molding, transfer molding or the like.

According to the present invention, it is possible to provide a thermoplastic elastomer material for a paper feeding roller having all of a high coefficient of friction, great delivery force, a polishing workability and an abrasion resistance which are characteristics to be required for the paper feeding roller.

These objects as well as other objects, features and advantages of the present invention will become more apparent to those skilled in the art from the following description with reference to the accompanying drawings.

### Brief Description of the Drawings

Fig. 1 is a perspective view showing a paper feeding roller,
Fig. 2 is a view showing a state in which an injection molding roller has been subjected to polishing, Fig. 2(a) is showing a roller having a component according to the present invention and a roller having an olefin based TPE component, Fig. 2(b) is showing a roller having a styrene based TPE component and Fig. 2(c) is showing a roller having an EPDM component,
Fig. 3 is a perspective view showing a testing machine which measures the delivery force and abrasion loss of a roller,
Fig. 4 is an enlarged view showing a portion in which a paper 3 is delivered from a pressure roller 1 in the testing machine of Fig. 3, and
Fig. 5 is a chart showing a change in a coefficient of friction under the irradiation of ultraviolet rays of a sample of the component according to the present invention and a sample of the EPDM component.

### Detailed Description of the Invention

Embodiments of the present invention will be described below and the present invention is not restricted to the following embodiments.

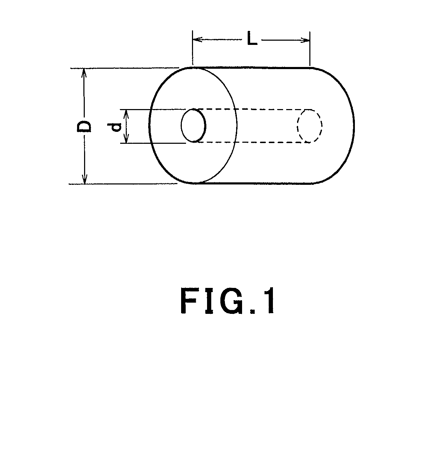

An olefin and styrene based mixture TPE according to each of first to third embodiments and an EPDM, a styrene based TPE or an olefin based TPE according to comparative examples which have a blending ratio shown in the following table 1 were mixed for about two minutes at 120 revolutions per minute (rpm) in a Banbury mixer heated to a temperature of 80°C. In the meantime, the temperature of a mixture in the Banbury mixer was raised to about 170°C. The mixture was further carried out at the same temperature for two minutes and a plasticizer shown in the Table 1 was added to the mixture, and the mixture was blended for about three minutes. As a result, the temperature of the mixture was raised to about 200°C. Next, the mixture in the Banbury mixer was taken out and rolled into a sheet having a thickness of 5 mm through a roller. The sheet was cooled and cut into fine particles through a cutter. Then, a hopper of a screw type injection molding machine (not shown) was filled with the fine particles so that a roller having an inside diameter d of 8 mm, an outside diameter D of 22 mm and a length L of 28 mm was obtained by the injection molding as shown in Fig. 1. In the Table 1, the blending indicates a weight % and a Type A Durometer hardness according to each of the first to third embodiments is A40.

**Table 1**

| | Embodiments(1st to 3rd) | | | EPDM | Styrene based TPE | Olefin based TPE |
|---|---|---|---|---|---|---|
| Blending | 1st | 2nd | 3rd | | | |
| Polystyrene | 5 | 10 | 15 | - | 20 | - |
| Polybutadiene | 10 | 20 | 30 | - | 40 | - |
| Polypropylene | 7.5 | 5 | 2.5 | - | - | 10 |
| EPDM | 37.5 | 25 | 12.5 | 50 | - | 50 |
| Plasticizer (paraffin oil) | 40 | 40 | 40 | 50 | 40 | 40 |

### (Polishing Workability)

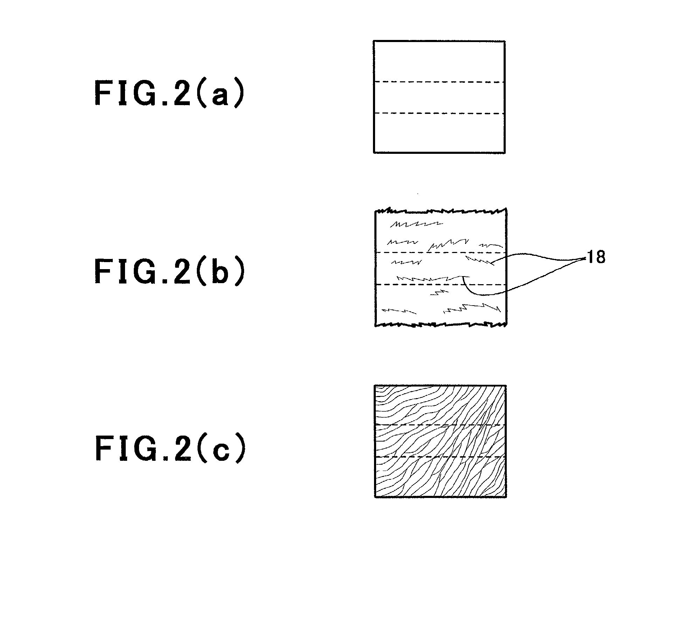

In order to actually use the roller to be an injection molded product thus obtained as a paper feeding roller, it is necessary to polish a surface, thereby enhancing the precision of an outside diameter. A roller having a component according to each of the first to third embodiments, a roller having an EPDM component, a roller having a styrene based TPE component and a roller having an olefin based TPE component were polished by means of dry and wet polishing machines. As to the roller having the component according to each of the first to third embodiments and the roller having the olefin based TPE component, a smooth polished surface could be obtained as shown in Fig. 2(a). As to the roller having the styrene based TPE component, a large number of pill-shaped projections 18 were formed on a surface as shown in Fig. 2(b). As to the roller having the EPDM component, a large number of cracks (shown in a large number of obliquely thin lines) were formed on a surface as shown in Fig. 2(c). Thus, it is apparent that the roller having the component according to each of the first to third embodiments is excellent in a polishing workability.

### (Delivery Force)

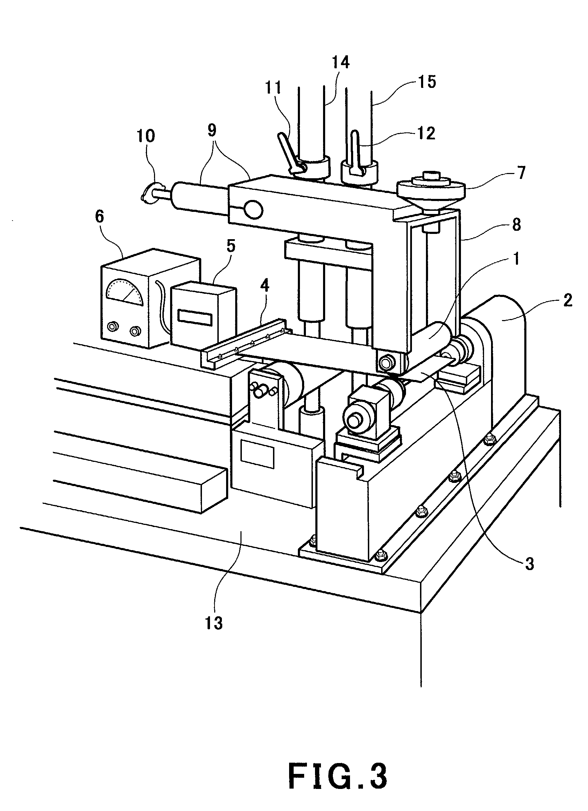

Next, each of the rollers after the polishing was attached to a testing machine shown in Fig. 3 to measure delivery force. The testing machine shown in Fig. 3 will be described below. The reference numeral 1 denotes a pressure roller which is rotatable and does not have driving means, the reference numeral 2 denotes a motor for driving a rotary shaft (indicated as 17 to be described later) to which a plurality of delivery rollers provided under the pressure roller 1 are attached, the reference numeral 3 denotes a paper to be delivered, and the reference numeral 4 denotes a support engaged with the end of the paper 3 for supporting and fixing the paper 3 thereto. A thin wire is extended from the support 4 and is connected to a delivery force measuring device 5, which is not shown in Fig. 3. The reference numeral 6 denotes an amplifier for regulating the gain of the delivery force measuring device 5.

The reference numeral 7 denotes a load of 100 gram. The load 7 of 100g is attached to a frame body 8. A member 9 extended from the frame body 8 has a self-weight compensating mechanism for setting, to zero, the self-weights of the pressure roller 1 and the frame body 8 which are loaded onto the delivered paper 3. More specifically, a self-weight compensating function can be displayed by adjusting an adjusting screw 10 provided on the end of the member 9 having the self-weight compensating mechanism, and only the weight of 100 gram of the load 7 can be loaded onto the paper 3. The reference numerals 11 and 12 denote levers for expanding rods 14 and 15 in a vertical direction in order to regulate the degree of horizontality of a base 13 provided with a testing device.

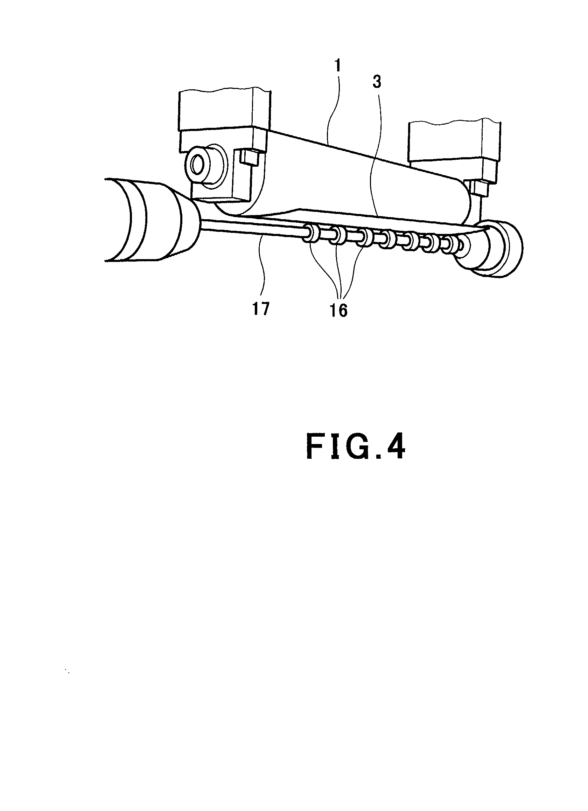

Fig. 4 is an enlarged view showing a portion where the paper 3 is delivered from the pressure roller 1, in which the rotary shaft 17 having a plurality of delivery rollers 16 attached thereto is positioned under the pressure roller 1 with the paper 3 interposed therebetween.

By using the testing machine having the above structure, the adjusting screw 10 was adjusted such that a load of 100 gram was applied to the paper 3 having a thickness of 0.06 mm, a width of 210 mm and a length of 296 mm (a woodfree paper, A4 size), the rotating speed of the motor 2 was set to 60 rpm and the delivery roller 16 was continuously rotated for 60 seconds. Thus, the maximum, minimum and mean values of force (tensile force ; newton)generated by delivering the paper 3 rightwards in Fig. 3 were measured by means of the delivery force measuring device 5. The test for measuring the delivery force (newton) was repeated five times. The mean value of the maximum values of the test performed five times, the mean value of the minimum values of the test performed five times and the mean value of the mean values of the test performed five times are indicated as maximum, minimum and mean values in Table 2 respectively.

**Table 2**

| | Maximum value | Minimum value | Mean value |
|---|---|---|---|
| First Embodiment | 4.02 | 1.18 | 2.31 |
| Second Embodiment | 3.99 | 1.12 | 2.26 |
| Third Embodiment | 3.84 | 1.19 | 2.22 |
| EPDM | 2.25 | 1.02 | 1.82 |
| Styrene based TPE | 3.40 | 1.11 | 2.09 |
| Olefin based TPE | 3.39 | 0.49 | 1.68 |

As is apparent from the Table 2, the delivery force of the roller having the component according to each of the first to third embodiments is greater than that of a roller having any other component.

### (Abrasion Loss)

By using the testing machine described above, the abrasion loss of the delivery roller was measured in the following manner. More specifically, the adjusting screw 10 was adjusted such that a load of 100 gram was applied to the paper (No. 1000 waterproof paper) 3 having a thickness of 0.06 mm, a width of 210 mm and a length of 296 mm, and the rotating speed of the motor 2 was set to 60 rpm to continuously rotate the delivery roller 16 for one hour. Then, the weight of the delivery roller 16 was measured. By repeating the delivery test five times, a mean value of an initial weight of one delivery roller, a mean value of a weight obtained after the continuous rotation of the delivery roller for one hour, and an abrasion loss obtained by subtracting a weight after the continuous rotation for one hour from the initial weight are indicated as initial weight, weight after rotation and abrasion loss in Table 3 respectively (a unit of gram). The specific gravities of the components are varied. In order to eliminate a measuring error caused by a difference in the specific gravity, the specific gravities has been set to one. An abrasion loss obtained by taking the specific gravity into consideration (specific gravity introduced abrasion loss) is also shown in the Table 3. It can be supposed that an abrasion resistance can be fairly evaluated by comparison of the abrasion loss obtained by taking the specific gravity into consideration.

**Table 3**

| | Initial Weight | Weigtht after rotation | Abrasion loss | Specific gravity | Specific gravity-introduced abrasion loss |
|---|---|---|---|---|---|
| First Embodiment | 7.7393 | 7.7004 | 0.0389 | 0.90 | 0.0432 |
| Second Embodiment | 7.7129 | 7.6557 | 0.0572 | 0.91 | 0.0629 |
| Third Embodiment | 7.7248 | 7.6536 | 0.0712 | 0.91 | 0.0782 |
| EPDM | 7.7773 | 7.6722 | 0.1051 | 1.15 | 0.0914 |
| Styrene based TPE | 7.7018 | 7.6013 | 0.1005 | 0.89 | 0.1129 |
| Olefin based TPE | 7.7416 | 7.6998 | 0.0418 | 0.92 | 0.0454 |

As shown in the Table 3, the roller having the component according to each of the first to third embodiments has a small abrasion loss. The olefin based TPE also has a small abrasion loss. The reason is that a plasticizer exudes from the olefin based TPE, thereby suppressing the abrasion.

On the other hand, the roller having the EPDM component and the roller having the styrene based TPE component have greater abrasion losses than those of the rollers according to the first to third embodiments.

### (Coefficient of Friction)

In the following Table 4, a coefficient of static friction and a coefficient of dynamic friction in a sample containing each component which is kneaded by the above-mentioned method and has a Type A Durometer hardness of A40 (a roller having an inside diameter d of 8 mm, an outside diameter D of 22 mm and a length L of 28 mm) are compared with each other. As shown in the Table 4, the component according to each of the first to third embodiments has high coefficients of static friction and dynamic friction.

**Table 4**

| | Coefficient of static friction | Coefficient of dynamic friction |
|---|---|---|
| First Embodiment | 1.679 | 1.456 |
| Second Embodiment | 1.728 | 1.492 |
| Third Embodiment | 1.742 | 1.516 |
| EPDM | 1.408 | 1.298 |
| Styrene based TPE | 1.624 | 1.425 |
| Olefin based TPE | 1.259 | 1.142 |

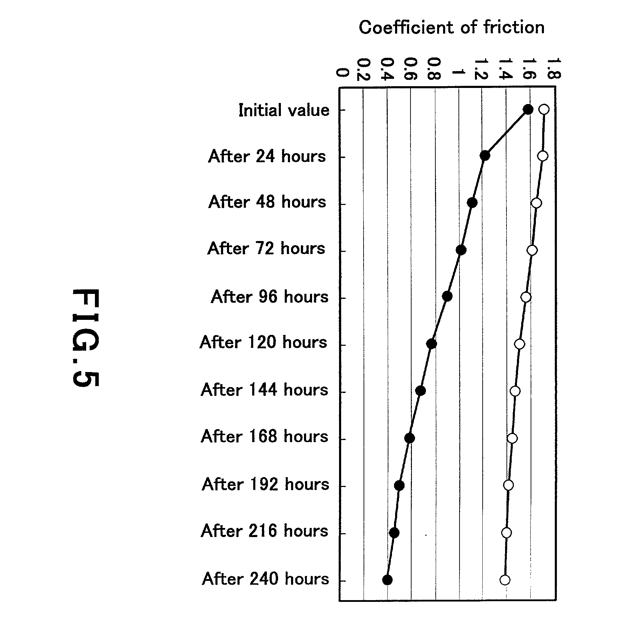

Furthermore, Fig. 5 shows a state of change of the coefficient of static friction under the irradiation of ultraviolet rays. In Fig. 5, a mark "○" indicates a sample of a blended component according to the second embodiment (a roller having an inside diameter d of 8 mm, an outside diameter D of 22 mm and a length L of 28 mm) and a mark "●" indicates a sample of the EPDM component (the roller having an inside diameter d of 8 mm, an outside diameter D of 22 mm and a length L of 28 mm).

As shown in Fig. 5, it is apparent that the component according to the present embodiment has a coefficient of friction less reduced under the irradiation of the ultraviolet rays and an excellent weather resistance.

As this invention may be embodied in several forms without departing from the spirit of essential characteristics thereof, the present embodiment is therefore illustrative and not restrictive, since the scope of the invention is defined by the appended claims rather than by the description preceding them, and all changes that fall within metes and bounds of the claims, or equivalence of such metes and bounds thereof are therefore intended to be embraced by the claims.

## Claims

1. A thermoplastic elastomer material for a paper feeding roller which contains, as an essential component, a thermoplastic elastomer mixture consisting of an olefin based thermoplastic elastomer using polyethylene or polypropylene as a hard segment and an ethylene-propylene copolymer or an ethylene-propylene-diene copolymer as a soft segment and a styrene based thermoplastic elastomer using polystyrene as a hard segment and polybutadiene, polyisoprene or polyolefin as a soft segment.

2. The thermoplastic elastomer material according to claim 1, wherein 20 to 80 parts by weight of the olefin based thermoplastic elastomer and 80 to 20 parts by weight of the styrene based thermoplastic elastomer are contained and a total amount of both thermoplastic elastomers is 100 parts by weight.
